# EUROPEAN PATENT APPLICATION

(11) **EP 1 918 891 A1**
(43) Date of publication of application: **07.05.2008**
(21) Application number: 06782987.9
(22) Date of filing: 24.08.2006
(51) Int. Cl.: G08B 13/14, B60R 11/02, B60R 16/023, B60R 25/00, B60R 25/10, G08B 13/00, H04B 7/26, H04Q 7/34, H04Q 7/38

(54) **OPERATION CONTROL APPARATUS OF MOVABLE ELECTRONIC DEVICE**

(30) Priority: 25.08.2005 JP 2005243852
(71) Applicant: MATSUSHITA ELECTRIC INDUSTRIAL CO., LTD., Kadoma-shi, Osaka 571-0051 (JP)
(72) Inventor: SATO, Shinichiro c/o Matsushita Electr.Ind., Chuo-ku, Osaka 540-6207 (JP); ITO, Mamoru c/o Matsushita Electr.Ind., Chuo-ku, Osaka 540-6207 (JP)
(74) Representative: Zimmer, Franz-Josef
(86) International application number: PCT/JP2006/316583
(87) International publication number: WO 2007/023886

(57) **Abstract**

A control device controls a movable electronic apparatus, and is arranged to be used with an enclosure. The enclosure includes a housing and an opening/closing member for opening and closing the housing. The housing encloses a certain space. The movable apparatus is arranged to be installed in the certain space. The control device includes a lock device for locking and unlocking the opening/closing member, a controller for controlling the lock device and the movable electronic apparatus, a first antenna connected with the controller and installed in the certain space, a second antenna connected with the controller and installed outside the certain space, and a portable device for communicating with the first antenna and the second antenna. The controller is operable to perform communication with the portable device via at least one of the first antenna and the second antenna, and control the movable electronic apparatus according to the communication with the portable device via said at least one of the first antenna and the second antenna. The control device prevents the electronic apparatus from operating unrightfully by a third person.

## Description

### TECHNICAL FIELD

The present invention relates to a control device for controlling an operation of a movable electronic apparatus installed in a certain space, such as a vehicle, a house, or an office.

### BACKGROUND ART

A car navigation system as a movable electronic apparatus which can be removed easily may be installed in a vehicle. This car navigation system can be used in another vehicle. This car navigation system may be used in vehicles and, if desired, may be used outside the vehicles. However, being the car navigation system, being taken out, may be stolen. Upon being stolen, the car navigation system can be used immediately by a person who has stolen the system.

Japanese Patent Laid-Open Publication No.2004-220108 discloses a method for performing an authentication to prevent a car navigation system qualified as being stolen from staring. The method will be described below.

A vehicle includes a number plate having a communication device mounted therein. The communication device stores and transmits dedicated data to identify the vehicle. Upon being turned on, the car navigation system starts communicating with the communication device in the number plate in order to receive the dedicated data. If the received data matches with data stored in the car navigation system, the car navigation system starts operating. If the received data does not match with the data stored in the car navigation system, or if the dedicated data is not received, the car navigation system judges that the system is not installed in a predetermined vehicle, and requires the inputting of a password. An appropriate owner knows the password, and inputs the password to starts the car navigation system outside the vehicle or in another vehicle.

In this method, however, the appropriate owner has to remember the password, and has to perform processes to input the password to use the car navigation system outside the vehicle or in another vehicle.

### SUMMARY OF THE INVENTION

A control device controls a movable electronic apparatus, and is arranged to be used with an enclosure. The enclosure includes a housing and an opening/closing member for opening and closing the housing. The housing encloses a certain space. The movable apparatus is arranged to be installed in the certain space. The control device includes a lock device for locking and unlocking the opening/closing member, a controller for controlling the lock device and the movable electronic apparatus, a first antenna connected with the controller and installed in the certain space, a second antenna connected with the controller and installed outside the certain space, and a portable device for communicating with the first antenna and the second antenna. The controller is operable to perform communication with the portable device via at least one of the first antenna and the second antenna, and control the movable electronic apparatus according to the communication with the portable device via said at least one of the first antenna and the second antenna.

The control device prevents the electronic apparatus from operating unrightfully by a third person.

### BRIEF DESCRIPTION OF THE DRAWINGS

Fig. 1 is a schematic view of a vehicle having a control device mounted therein according to an exemplary embodiment of the present invention.
Fig. 2 is a block diagram of the control device according to the embodiment.
Fig. 3 is a flowchart showing an operation of the control device according to the embodiment.
Fig. 4 is a flowchart showing an operation of the control device according to the embodiment.
Fig. 5 is a flowchart showing an operation of an electronic apparatus according to the embodiment.

### REFERENCE NUMERALS

- 101: Vehicle Body (Housing)
- 102: Inside Space (Certain Space)
- 103: Door (Opening/Closing Member)
- 104: Door Lock Device (Lock Device)
- 105: Car Navigation System (Movable Electronic Apparatus)
- 106: Control Section
- 107: Internal Antenna (First Antenna)
- 108: External Antenna (Second Antenna)
- 109: Portable Device
- 110: Accessible Area of External Antenna
- 201: Controller
- 202: Wireless Communication Unit
- 203: Data Memory
- 204: LAN Communication Unit
- 205: Door ECU
- 206: Door Switch
- 220: Control Device
- 221: Controller
- 222: Nonvolatile Memory
- 223: Antenna
- 224: Alarm Buzzer
- 225: Install Sensor
- 226: Controller of Car Navigation System

### DETAIL DESCRIPTION OF THE PREFERRED EMBODIMENT

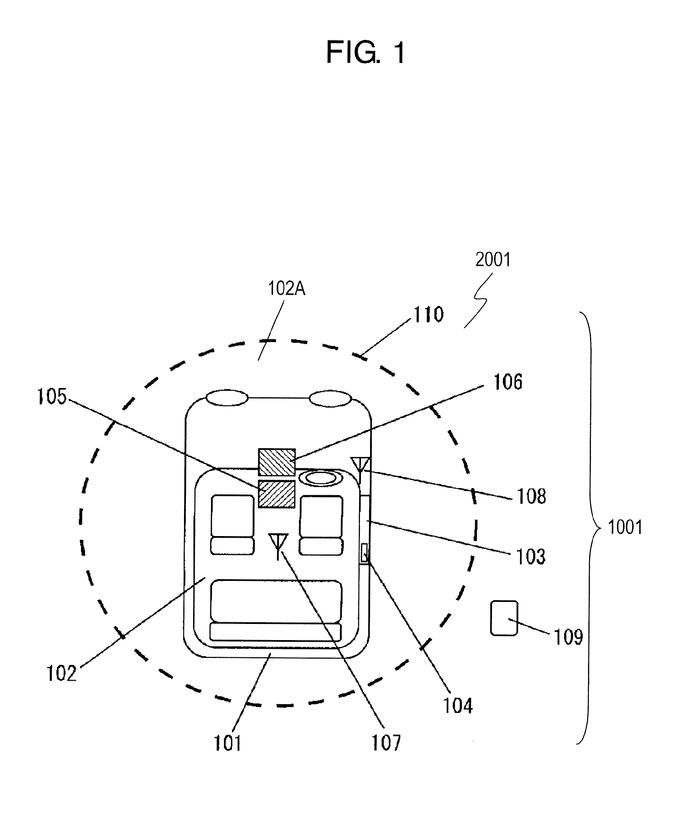

Fig. 1 is a schematic view of a vehicle 2001 having a control system 1001 mounted therein according to an exemplary embodiment of the present invention. The vehicle 2001 includes a vehicle body 101 as a housing and a door 103. The vehicle body 101 separates an inside space 102 as a certain space from an outside space 102A outside the certain space. The door 103 functions as an opening/closing member for opening and closing the vehicle body 101. That is, the body vehicle 101 and the door 103 function as an enclosure for enclosing the certain space, i.e., the inside space 102. The door 103 has a door lock device 104 for locking and unlocking the door 103. A car navigation system 105 as a movable electronic apparatus, a control section 106, and an interior antenna 107 is provided in the inside space 102. An external antenna 108 is mounted to the vehicle 2001 in the outside space 102A. A portable device 109 is arranged to communicate with both the internal antenna 107 and the external antenna 108. The internal antenna 107 has an accessible area limited to the inside space 102 of the vehicle. The external antenna 108 covers an accessible area 110 in the outside space 102A of the vehicle. The accessible area 110 excludes the internal space 102.

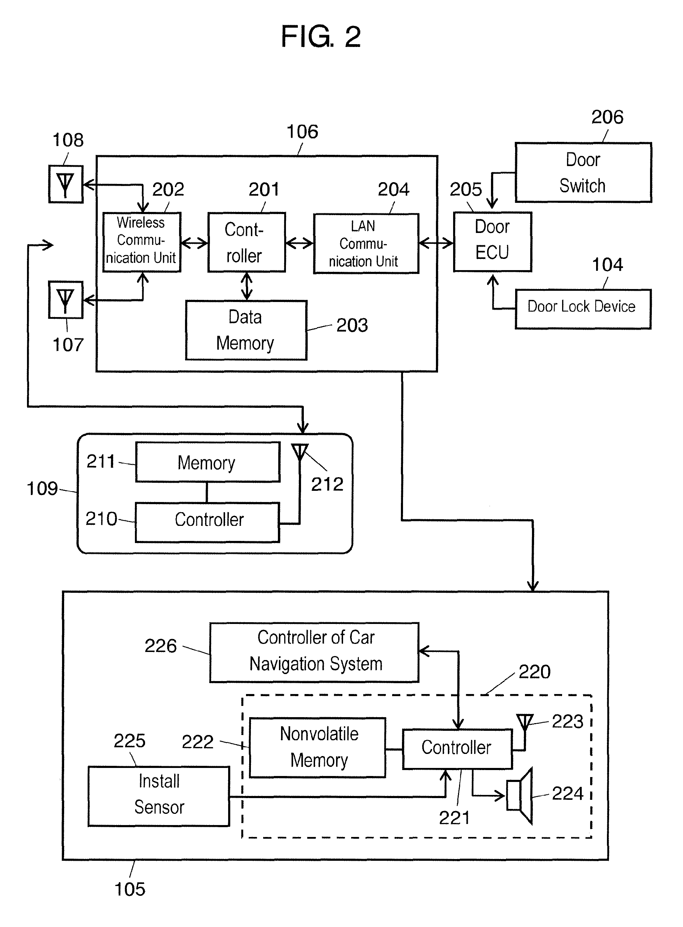

Fig. 2 is a block diagram of the control system 1001. The control section 106 includes a controller 201, a wireless communication unit 202, a data memory 203, and a local area network (LAN) communication unit 204. The wireless communication unit 202 is connected to the internal antenna 107 and the external antenna 108 for communicating between the portable device 109 and the car navigation system 105 via these antennas. The data memory 203 stores identification data for identifying the portable device 109 and identification data for identifying the car navigation system 105. The LAN communication unit 204 controls LAN communication with a door electronic control unit (ECU) 205 which controls an operation of the door lock device 104. The door ECU 205 is connected to door lock device 104 and a door switch 206, monitors a lock/unlock status and an open/close status of the door 103, and notify the control section 106 of the statuses. In responsive to a command from the control section 106, the door ECU 205 directs the door lock device 104 to lock or unlock the door 103. The portable device 109 includes a controller 210, a memory 211, and an antenna 212. The memory 211 stores the identification data for identifying the portable device 109. The car navigation system 105 includes a control device 220, an install sensor 225, and a controller 226. The control device 220 includes a controller 221, a nonvolatile memory 222, an antenna 223, and an alarm buzzer 224. The controller 221 communicates with the control section 106 via the antenna 223, and stores data indicating operation-permission or data indicating operation-prohibition in the nonvolatile memory 222 in response to a signal from the control section 106. In responsive to a command from the controller 221, the alarm buzzer 224 generates an alarm, such as an alarm sound or alarm light. The install sensor 225 is implemented by a mechanical sensor for examining whether or not the car navigation system 105 is mounted to an install station by determining whether or not the install sensor 225 is depressed with a projection projecting from the install station. The controller 226 of the car navigation system 105 communicates with the controller 221 so as to read data from the nonvolatile memory 222.

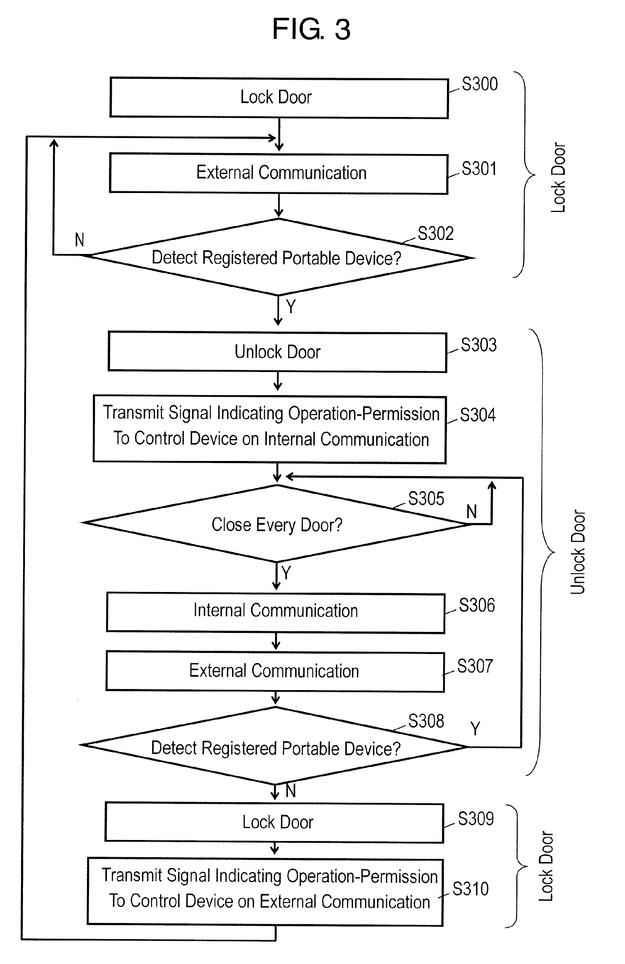

Fig. 3 is a flowchart showing an operation of the control section 106. While the door 103 is closed and locked with the door lock device 104 (Step S300), the control section 106 starts performing external communication via the external antenna 104 with the portable device 109 periodically (Step S301). The control section 106 examines whether or not the portable device 109 performing the external communication in Step S301 is registered (Step S302).

A procedure by which the control section 106 detects the portable device 109 will be described below. The controller 201 of the control section 106 reads the identification data from data memory 203. The wireless communication unit 202 of the control section 106 receives the identification data from the portable device 109 through the external communication performed at Step S301. The controller 201 then compares the identification data read from the memory with the received identification data. When the two of data match with each other, the controller 201 judges that the portable device 109 is registered, and detects the registered portable device 109.

If the control section 106 judges at Step S302 that the portable device 109 is registered, the control section 106 directs the door lock device 104 to unlock the door 103 (Step S303). If the control section 106 judges at Step S302 that the portable device 109 is not registered, the control section 106 performs the periodic external communication in Step S301. After the door 103 is unlocked at Step S303, the control section 106 sends a signal indicating operation-permission to the control device 220 via the external antenna 107 (Step S304). If the car navigation system 105 is installed in the inside space 102, the signal indicating operation-permission is received by the car navigation system 105. Then, the control section 106 examines whether the door 13 is closed or not (Step S305). If judging that the door 13 is not closed, the control section 106 again examines whether the door 13 is closed or not (Step S305). When judging that the door 13 is closed, the control section 106 performs internal communication with the internal antenna 107 (Step S306), performs external communication with the external antenna 108 (Step S307), and then detects the portable device 109 which is registered (Step S308). If the control section 106 does not detect the portable device 109 in Step S308, the control section 106 directs the door lock device 104 to lock the door 103 (Step S309). If the control section 106 detects the registered portable device 109 in Step S308, the control section 106 examines whether the door 103 is closed or not (Step S305). The control section 106 directs the door lock device 104 to lock the door 103 in Step S309, and then, sends a signal indicating operation-prohibition to the control device 220 via the internal antenna 107 (Step 310). When the car navigation system 105 is located in the inside space 102, the signal indicating operation-permission is received by the car navigation system 105. The internal communication via the internal antenna 107 between the car navigation system 105 and the control section 106 is synchronized with the external communication via the external antenna 108 between the control section 106 and the portable device 109.

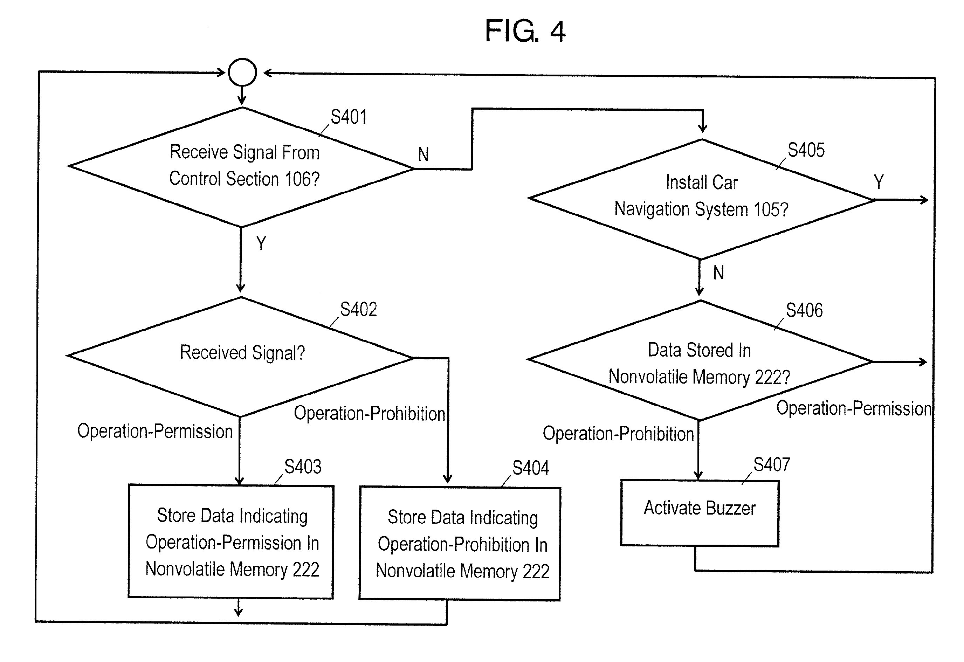

Fig. 4 is a flowchart showing an operation of the controller 221 of the control device 220 installed in the car navigation system 105. The controller 221 examines whether or not a signal is received from the control section 106 (Step S401). When judging at Step S401 that no signal is received from the control section 106, the controller 221 examines, according to the signal output from the install sensor 225, whether or not the car navigation system 105 is installed at the install station, i.e., at a predetermined position in the internal space 102 (Step S405). If judging at Step S405 that the car navigation system 105 is installed at the predetermined position, the controller 221 examines in step S401 whether or not a signal is received from the control section 106. If receiving a signal from the control section 106 in Step S304 or S310 shown in Fig. 3, the controller 221 checks the signal (Step D402). If the signal indicates operation-permission, the controller 221 stores data indicating operation-permission in the nonvolatile memory 222 (Step S403), and examining in Step S401 whether or not the controller 221 receives a signal from the control section 106. If the signal indicates operation-prohibition, the controller 221 stores data indicating operation-prohibition in the nonvolatile memory 222 (Step S404), and examines in Step S401 whether or not the controller 221 receives a signal from the control section 106. If judging in Step S405 that the car navigation system 105 is not installed at its install location, the controller 221 reads the data stored in the nonvolatile memory 222 (Step S406). If the data read from the nonvolatile memory 222 indicates operation-prohibition, the controller 221 activates the alarm buzzer 224 (Step S407). When the read out data indicates operation-permission, the controller 221 examines in Step S401 whether or not the controller 221 receives a signal from the control section 106.

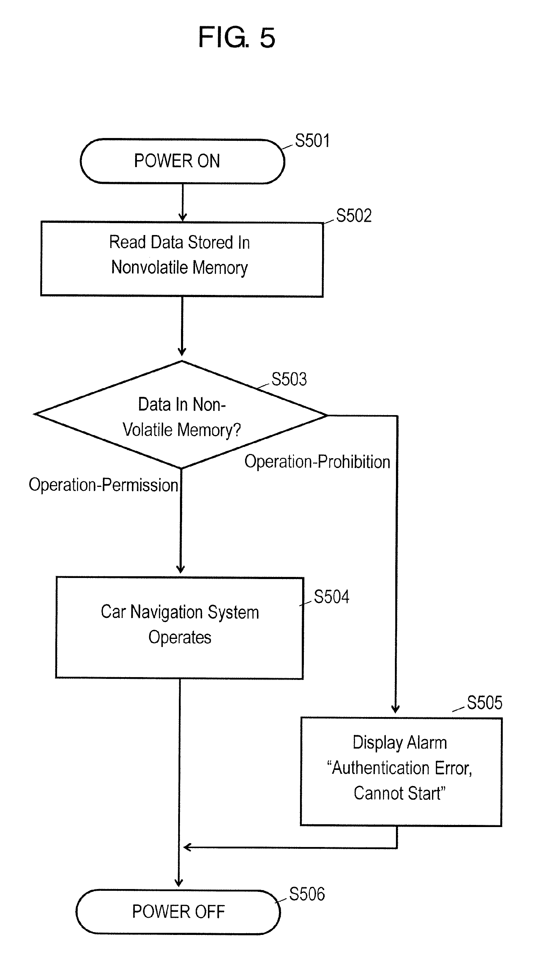

Fig. 5 is a flowchart showing an operation of the car navigation system 105. The car navigation system 105 is turned on (Step S501), and then, the controller 226 directs the controller 221 of the control device 220 to read data from the nonvolatile memory 222 (Step S502). When judging in Step S503 that the data read out from the memory 222 indicates operation-permission, the controller 226 allows the car navigation system 105 to operate (Step S504). The car navigation system 105 can be turned off during operating (Step S506). If judging in Step S503 that the data read out from the nonvolatile memory 222 indicates operation-prohibition, the controller 226 displays an alarm indicating that the car navigation system 105 can not start operating (Step S505), and then, automatically turns off the car navigation system 105 (Step S506).

An actual operation of the car navigation system 105 will be described below referring to Figs. 3 to 5.

At first, an operation of the system 105 installed at the predetermined position in the case that an operator holding the registered portable device 109 gets in the vehicle 2001 with the door 103 locked will be described.

The car navigation system 105 is initially turned off, and the nonvolatile memory 222 initially stores the data indicating operation-prohibition.

As the operator holding the portable device 109 approaches the vehicle body 101, the control section 106 detects the portable device 109 by the external communication (Steps S301 and S302 shown in Fig. 3). Then, the control section 106 directs the door lock device 104 to unlock the door 103 (Step S303), and transmits the signal indicating operation-permission to the control device 220 through the internal communication (Step S304). The control device 220 located in the internal space 102 receives the signal (Step S401 shown in Fig. 4). If the signal indicates operation-permission (Step S402), the control device 220 stores the data in the nonvolatile memory 222 (Step S403).

After the operator holding the portable device 109 rides in the vehicle and turns on the car navigation system 105 (Step S501 shown in Fig. 5), the controller 226 of the car navigation system 105 directs the controller 221 of the control device 220 to read the data from the nonvolatile memory 222 (Step S502). Since the read data indicates operation-permission, the controller 226 starts the car navigation system 105 (Step S504), and allows the operator to use the car navigation system 105.

Then, the operator holding the portable device 109 turns off the car navigation system 105, gets off from the vehicle 2001, and closes the door 103. If the control section 106 detects in Step S305 shown in Fig. 3 that the operator leaves from the vehicle 2001 (Steps S305 to S308), the control section 106 directs the door lock device 104 to lock the door 103 (Step S309) and transmits the signal indicating operation-prohibition to the control device 220 through the internal communication (Step S310). The control device 220 receives the signal (Step S401). The control device 220 judges that the signal indicates operation-prohibition (Step S402), and then, stores data indicating operation-prohibition in the nonvolatile memory 222 (Step S404). If a third person gets in the vehicle and activates a power switch of the car navigation system 105 (Step S501), the controller 226 of the car navigation system 105 reads the data stored in the nonvolatile memory 222 (Step S502). Since the read data indicates operation-prohibition, the controller 226 displays an alarm indicating the car navigation system 105 cannot starts operating, and does not starts operating (Step S505), thus preventing the third person from using the car navigation system 105. In case that the third person removes the car navigation system 105 from the install station to try to take out the system 105 from the vehicle, this removal is detected by the install sensor 225 (Step S405). Since the nonvolatile memory 222 stores the data indicating operation-prohibition (Step S406), the alarm buzzer 224 generates an alarm sound (Step S407). In the case that the third person takes out the car navigation system 105 regardless of the alarm sound generated by the alarm buzzer 224, the car navigation system 105 does not starts operating even if being turned on since the nonvolatile memory 222 stores the data indicates operation-prohibition.

Then, an operation of the car navigation system 105 in the case that an operator holding the registered portable device 109 gets in the vehicle 2001 with the door 103 being locked and takes out the car navigation system 105 from the vehicle for using the system 105 at the outside of the vehicle or in another vehicle.

The car navigation system 105 is initially turned off, and the nonvolatile memory 222 initially stores the data indicating operation-prohibition.

As the operator holding the registered portable device 109 approaches the vehicle body 101, the control section 106 detects the portable device 109 through the external communication (Steps S301 and S302). The control section 106 then directs the door lock device 104 to unlock the door 103 (Step S303), and transmits a signal indicating operation-permission to the control device 220 through the internal communication (Step S304). Upon receiving the signal indicating operation-permission (Step S401), the control device 220 located in the internal space 102 judges that the signal indicates operation-permission (Step S402), and stores data indicating operation-permission in the nonvolatile memory 222 (Step S403). Then, the operator holding the portable device 109 gets in the vehicle and removes the car navigation system 105. The removal of the car navigation system 105 is detected by the install sensor 225 (Step S405). Since the nonvolatile memory 222 stores the data indicating operation-permission (Step S406), the alarm buzzer 224 does not generate an alarm sound. The control section 106 detects that the operator having the car navigation system 105 with him/her get off the vehicle, closes the door 103, and leave away from the vehicle body 101 (Steps S305 to S308). Then, the control section 106 directs the door lock device 104 to lock the doors 103 (Step S309), and transmits the signal indicating operation-prohibition to the control device 220 through the internal communication (Step S310). However, at the moment, the operator holding the portable device 109 takes the car navigation system 105 out of the accessible area 110 where the external communication cannot be performed, and thereby, prevents the control device 220 from receiving the signal indicating operation-prohibition while the nonvolatile memory 222 continuously stores the data indicating operation-permission. When the car navigation system 105 is turned on at a destination, such as another vehicle, (Step S501), the controller 226 directs the controller 221 of the control device 220 to read the data stored in nonvolatile memory 222 (Step S502). Since the read data indicates operation-permission, the operator can start operating and use the car navigation system 105 (Step S504).

According to this embodiment, the vehicle 2001 having the car navigation system 105 installed in the certain space, i.e., inside space 102. The vehicle 2001 may be a house or office which has such a certain space instead of the vehicle 2001, providing the same effects. Particularly in such a house or office, a person unrightfully entering into the house or office may try to start a personal computer as a movable electronic apparatus or take out the computer as to sneakingly look at data. Since this person do not unlock a door of the house or office with a door lock device using the registered portable device 109, a nonvolatile memory in the computer continuously stores data indicating operation-prohibition, thereby inhibiting the computer from starting operating. If the persons take out the personal computer from the house or office, the nonvolatile memory continuously stores the data indicating operation-prohibition, thereby inhibiting the computer from starting operating. The movable electronic apparatus may be a video system.

According to this embodiment, the controller 221 of the control device 220 reads the data stored in the nonvolatile memory 222 by when the car navigation system 105 is turned on. Alternatively, the controller 226 of the car navigation system 105 directly reads the data stored in the nonvolatile memory 222.

According to this embodiment, the fact that the nonvolatile memory 222 stores the data indicating operation-permission or operation-prohibition defines whether the car navigation system 105 can start operating or not. According to this embodiment, the car navigation system 105 may start operating regardless of the data indicating operation-permission or operation-prohibition, but it may be determined whether or not the system 105 performs a predetermined function according to the data.

According to this embodiment, the control section 106 detects the portable device 109 through the external communication when the operator holding the portable device 109 approaches the vehicle body 101 with the door 103 being locked. Upon directing the door lock device 104 to unlock the doors 103, the control section 106 sends the signal indicating operation-permission to the control device 220 through the internal communication. According to this embodiment, after the operator holding the portable device 109 unlocks the door 103 with the door lock device 104 and gets in the vehicle, the control section 106 may transmit the signal indicating operation-permission to the control device 220 upon detecting the portable device 109 through the internal communication.

The movable electronic apparatus according to the embodiment is the car navigation system, however, may be a car audio system.

### INDUSTRIAL APPLICABILITY

A control device according to the present invention prevents the electronic apparatus from operating unrightfully by a third person, thus being useful as a controller for controlling the movable electronic apparatus in a certain space.

## Claims

1. A control device for controlling a movable electronic apparatus, said control device being arranged to be used with an enclosure, the enclosure including a housing and an opening/closing member for opening and closing the housing, the housing enclosing a certain space, the movable apparatus being arranged to be installed in the certain space, said control device comprising:
a lock device for locking and unlocking the opening/closing member;
a controller for controlling the lock device and the movable electronic apparatus;
a first antenna connected with the controller and installed in the certain space;
a second antenna connected with the controller and installed outside the certain space; and
a portable device for communicating with the first antenna and the second antenna,
wherein the controller is operable to
perform communication with the portable device via at least one of the first antenna and the second antenna, and
control the movable electronic apparatus according to the communication with the portable device via said at least one of the first antenna and the second antenna.

2. The control device according to claim 1, wherein the movable electronic device includes a nonvolatile memory, and operates according to data stored in the nonvolatile memory.

3. The control device according to claim 2, wherein the nonvolatile memory stores data for preventing the movable electronic apparatus from operate.

4. The control device according to claim 3, wherein the data stored in the nonvolatile memory is changed through communication via the first antenna between the movable electronic apparatus and the controller.

5. The control device according to claim 4, wherein the communication via the first antenna between the movable electronic apparatus and the controller is synchronized with the communication via the second antenna between the portable device and the controller.

6. The control device according to claim 5, further comprising an install sensor for detecting whether or not the movable electronic apparatus is installed at a predetermined position in the certain space.

7. The control device according to claim 6, wherein the controller is arranged to generate an alarm when the install sensor detects that the movable electronic apparatus is not installed at the predetermined position and when the nonvolatile memory stores the data for preventing the movable electronic apparatus from operating.

8. The control device according to claim 1, wherein the enclosure is a vehicle.

9. The control device according to claim 8, wherein the movable electronic apparatus is a car navigation system.

10. The control device according to claim 8, wherein the movable electronic apparatus is a car audio system.

11. The control device according to claim 8, wherein the movable electronic apparatus is a video system.

12. The control device according to claim 1, wherein the enclosure module is a house.

13. The control device according to claim 12, wherein the movable electronic apparatus is a personal computer.

14. The control device according to claim 12, wherein the movable electronic apparatus is a video system.
